# EUROPEAN PATENT SPECIFICATION

(11) **EP 3 458 703 B1**
(45) Date of publication and mention of the grant of the patent: **17.07.2024**
(21) Application number: 17721818.7
(22) Date of filing: 28.04.2017
(51) Int. Cl.: F02K 3/06, F02C 7/32, F02C 7/36

(54) **COMPRESSOR SYSTEM**
VERDICHTERSYSTEM
SYSTÈME DE COMPRESSEUR

(30) Priority: 19.05.2016 GB 201608825
(43) Date of publication of application: 27.03.2019
(73) Proprietor: Derwent Aviation Consulting Ltd, Burton on Trent, Staffordshire DE14 1SN (GB); Sellick, Robert J., Nympsfield, Gloucestershire GL10 3TY (GB); Speak, Trevor H., Dursley, Gloucestershire GL11 4EP (GB)
(72) Inventor: SELLICK, Robert John, Nympsfield Gloucestershire GL10 3TY (GB); SPEAK, Trevor Harold, Dursley Gloucestershire GL11 4EP (GB)
(74) Representative: Appleyard Lees IP LLP
(86) International application number: PCT/GB2017/051207
(87) International publication number: WO 2017/198999

(56) References cited:
- EP-A2- 2 728 140
- US-A1- 2008 098 713
- US-A1- 2008 110 151
- US-A1- 2016 069 260

## Description

The present disclosure relates to a turbo machine.

In particular the disclosure is concerned with turbo machine comprising a fan and low pressure compressor system.

### Background

Turbo machinery, in particular gas turbine engines, may comprise, in series, a fan, a booster compressor and a high pressure compressor which deliver pressurised air to a core of the turbo machinery, for example a combustor unit, where fuel and air combust and are exhausted to a series of turbines to drive the fan and compressor units, as well as providing thrust.

In response to the need for greater fuel efficiency, gas turbine engines having higher bypass ratios and higher overall pressure ratios have been produced. This results in an increased conflict between the optimum design parameters for the fan and the core engine. At higher bypass ratios the optimum fan pressure ratio is relatively low, which results in lower rotational speed and higher fan shaft torque. Booster stages coupled to the fan shaft rotate more slowly and require more stages to achieve the desired pressure ratio or require an increased radius which affects the fan hub line and results in an increased fan tip diameter with adverse consequences on engine weight and drag. To minimise these effects it is desirable to achieve the maximum pressure ratio in the core engine, but this requires very advanced aerodynamic technology, high temperature materials and advanced cooling technology to achieve a compact core design which can accommodate the high torque fan shaft.

In a two-shaft turbofan it is known to attach a booster compressor directly to the fan shaft such that the booster rotates at the same speed as the fan. At higher bypass ratios, the blade speed of the booster is very low and may require many stages to achieve the required pressure ratio To achieve acceptable booster aerodynamic loading in such a configuration, several booster stages may be required, and each booster stage must achieve sufficient blade speed, which requires the diameter of each booster stage to be relatively large. Both of these design characteristics increase the overall size of the resultant engine, which results in extra weight and aerodynamic drag. The shaft which drives the fan and booster must also be sized to deal with the torque load of the booster and fan, further increasing the weight and size of such design variations.

An alternative arrangement is described in European Patent Application EP2728140A2, and shown in Figure 1 Using the reference numerals of European Patent Application EP2728140A2, a fan stage 36 is coupled to a low-pressure turbine by a low pressure shaft 56. A gearing 44 is provided with inputs form the low pressure shaft 56 and a high pressure shaft 40. An intermediate speed booster 24 is coupled to an output of the gearing 44. The output of the gearing 44 is dependent upon the difference in rotational speed between the low pressure shaft and high pressure shaft. Hence one of the low pressure shaft and high pressure shaft provides a "subtraction" from the "input" provided by the other to the gearing. Such a configuration may result in an extra load on at least one of the shafts which requires the shaft to be reinforced with extra material to accommodate the load, and hence increases the overall weight and adversely impacts the core engine mechanical design.

Additionally, and common to all gas turbine engines to which such compressor systems are attached, is a need to rotate the rotatable elements of the compressor system at engine start up. This may be done using a starter motor coupled to the outside of an engine's casing, and coupled to the high pressure spool via a shaft and gearbox. While this achieves the goal of starting the engine, the starter motor and gear box have no function during normal operation of the engine, thereby adding additional weight and size to the engine structure.

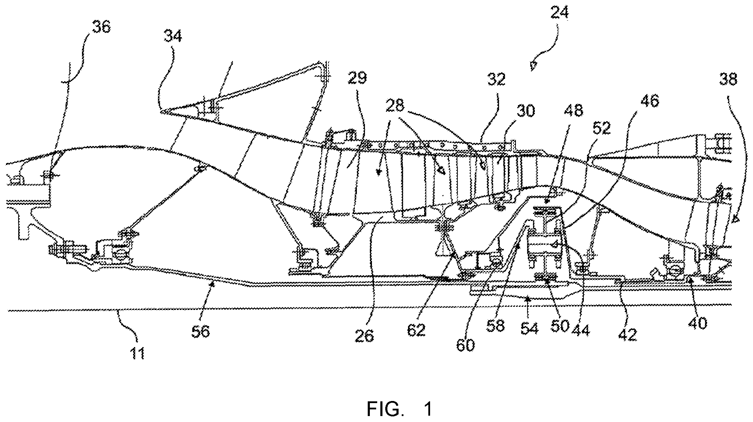

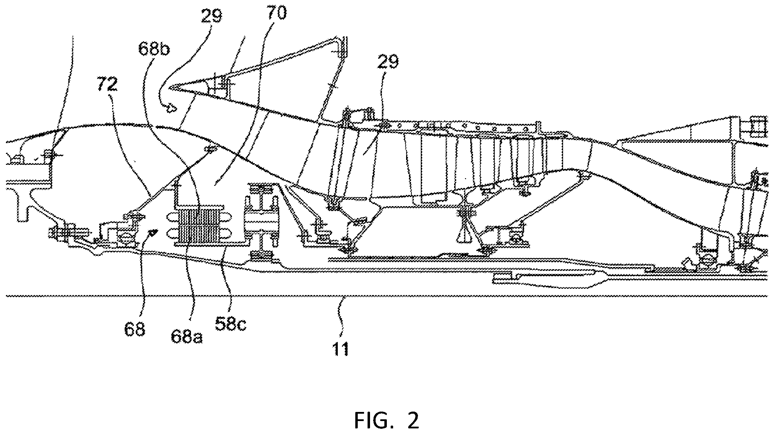

An alternative arrangement is also described in European Patent Application EP2728140A2 (referred to above), and shown in Figure 2. Using the reference numerals of European Patent Application EP2728140A2, an electrical machine 68 is provided within a central housing of the engine. This example differs from that shown in Figure 1 in that it is the machine 68 which is driven from an output from the gearing 44, rather than a booster compressor 24. In this example the booster 24 is driven from the high pressure shaft 40. Hence while this example provides a solution to reducing weight of a starter motor assembly, extra load is applied to the low pressure shaft 56, which provides an input to the electric motor 68 and fan, and extra load is also applied to the high pressure shaft 54, which must drive the booster compressor 24 and high pressure compressor.

Hence a system which provides an increased compression ratio for the same or lower booster compressor diameter and number of booster stages than a conventional arrangement, which shares the load requirements of a booster compressor between a low pressure shaft and high pressure shaft, and provides a weight and size efficient starter motor arrangement, is highly desirable.

### Summary

According to the present disclosure there is provided apparatus as set forth in the appended claims. Other features of the invention will be apparent from the dependent claims, and the description which follows.

Accordingly there is provided a compressor system for a turbo machine 10, the turbo machine 10 comprising : a low pressure shaft 36 coupled to a low pressure turbine 34; and a high pressure shaft 38 coupled to a high pressure turbine 32; the high pressure shaft 38 and low pressure shaft 36 being rotatable about a central rotational axis 39; the compressor system comprising : a fan 12 driven by the low pressure turbine 34 via the low pressure shaft 36; a booster compressor 16; and a gear unit 40; wherein : the low pressure shaft 36 is coupled to a first input member 42 of the gear unit 40; the high pressure shaft 38 is coupled to a second input member 44 of the gear unit 40; and an intermediate rotor 41 is coupled to an output member 46 of the gear unit 40 such that the intermediate rotor 41 is driveable by the low pressure shaft 36 and the high pressure shaft 38; and wherein the intermediate rotor comprises rotatable elements 16, 43a of : the booster compressor 16; and an electric motor-generator 43.

The intermediate rotor 41 may be centred on the central rotational axis 39 and comprises : a central region 45 which forms the booster compressor 16; the central region 45 having a first end region and a second end region longitudinally spaced apart along the central rotational axis 39 by the central region 45; a first coupling 47 extends from the first end region of the intermediate rotor 41 to the rotatable element 43a of the electric motor generator 43; and a second coupling 49 extends from the second end region of the intermediate rotor 41 to the gear unit 40.

The system may further comprise a first non rotatable stator structure 60 provided around the central rotational axis 39 and fixed to a static casing 62 of the compressor system.

The first non rotatable stator structure 60 may be located longitudinally along the central rotational axis 39 between the fan 12 and the booster compressor 16.

The rotatable element 43a of the electric motor-generator 43 may comprise an electrical rotor assembly; and the electric motor-generator 43 may further comprise a non rotatable stator element 43b coupled to the first non rotatable stator structure 60.

The system may further comprise a second non rotatable stator structure (66) provided around the central rotational axis 39 located longitudinally along the central rotational axis 39 between the booster compressor 16 and high pressure turbine 32.

The system may further comprise a brake 68 is provided between the non rotatable stator structure 60 and the fan 12, wherein, the brake 68 : in a first mode of operation is operable to lock the fan 12 relative to a non rotatable stator structure 60; and in a second mode of operation is operable to allow the fan 12 to rotate about the central rotational axis 39 relative to the non rotatable stator structure 60.

The system may further comprise a one directional coupling 80 is provided between the high pressure shaft 38 and the non rotatable stator structure 66; the one directional coupling 80 operable to allow the high pressure shaft 38 to rotate about the central rotational axis 39 in either, but not both of, a clockwise or anti-clockwise direction.

The electrical motor generator may be located external to an outer casing of the compressor system; and the rotatable element of the electric motor generator may be provided as a power off take shaft 90; whereby the power offtake shaft 90 is : rotatably coupled at one end to the intermediate rotor 41; and rotatably coupled at an opposite end to the electric motor generator.

The proportion of torque extracted from each shaft 36, 38 may remain constant throughout the running range of the turbo machine 10.

The turbo machine 10 may comprise an engine core flow path 14, the booster compressor 16 being provided at or downstream of an intake of the engine core flow path 14 and the fan 12 is provided upstream of the booster compressor 16.

The turbo machine 10 may further comprise a bypass duct 26 radially outward of engine core flow path 14.

The low pressure shaft 36 and high pressure shaft 38 are configured, in use, to contra-rotate.

There is thus provided a system wherein a booster compressor and starter-motor-generator is driven both at a higher rotational speed than the fan, and is driven by inputs from a low pressure shaft and high pressure shaft. Thus the load of booster compressor and starter-motor-generator is shared between the low pressure shaft and high pressure shaft. This configuration enables generation of a high compression ratio whilst permitting smaller booster length and diameter, as well as obviating the need for an external starter-motor-generator and hence enables an engine with a higher power to weight/size ratio than that of the related art.

### Brief Description of the Drawings

Examples of the present disclosure will now be described with reference to the accompanying drawings, in which:
Figure 1 shows a known booster arrangement for a gas turbine engine, as described in European Patent Application EP2728140A2;
Figure 2 shows a further arrangement described in European Patent Application EP2728140A2;
Figure 3 is a diagrammatic representation of a gas turbine engine having a fan and low pressure compressor system with an electric motor-generator according to the present disclosure;
Figure 4 shows a diagrammatic view of a fan and booster arrangement for a turbo machine according to the present disclosure, similar to that shown in Figure 3;
Figure 5 shows a diagrammatic view of an alternative fan and booster arrangement to that shown in Figure 4;
Figure 6 is a diagrammatic cross-sectional view of an epicyclic gear arrangement of the compressor system of the present disclosure;
Figure 7 is an alternative diagrammatic cross-sectional view of an epicyclic gear arrangement of the compressor system not forming part of the invention as claimed; and
Figure 8 shows a diagrammatic view of an open rotor arrangement having a fan and booster arrangement according to the present disclosure.

### Detailed Description

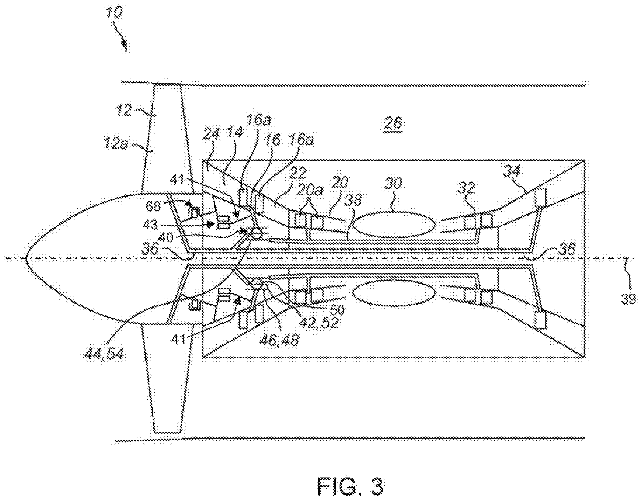

For the avoidance of doubt, the reference numerals used in relation to features of the examples of the present disclosure shown in Figure 3 to 8 have no relation to the numbering system of the related art Figures 1 and 2.

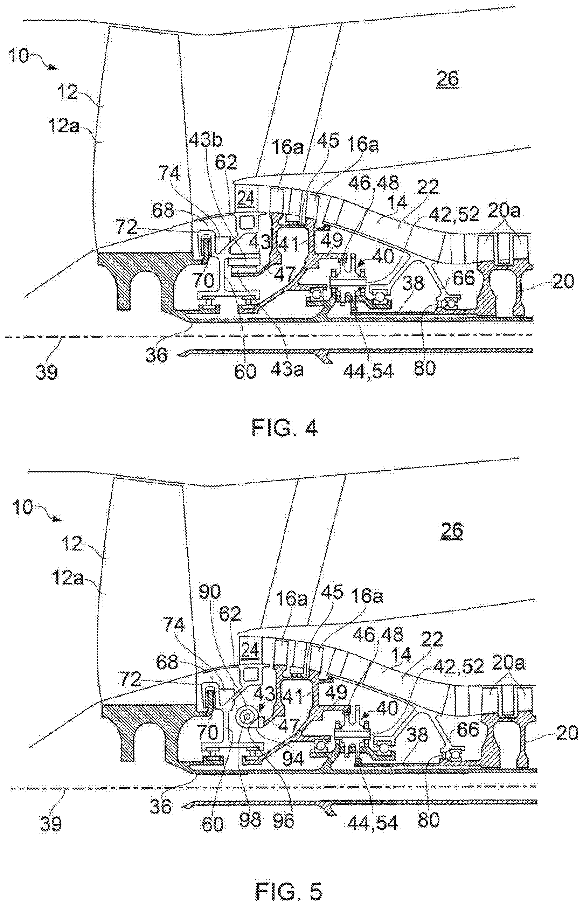

Figure 3 and Figure 4 show a turbo machine 10 according to the present disclosure, for example a gas turbine engine. The gas turbine 10 comprises a fan 12 upstream of engine core flow path 14, the engine core flow path 14 defined by a booster compressor 16 and an additional high pressure compressor 20 spaced along a common duct 22.

The fan 12, booster compressor 16 and high pressure compressor 20 each comprise at least one ring (i.e. array) of rotor blades 12a, 16a, 20a respectively. The booster compressor 16 may additionally comprise an array or arrays of stator vanes upstream, downstream and/or between the rotor stages 16a, 20a. The engine core flow path 14 has an intake 24 downstream of the fan 12. The booster compressor 16 is provided in the region of the intake 24 (that is to say at or downstream of the intake 24), and is also downstream of fan 12.

The turbo machine 10 further comprises a bypass duct 26 radially outward of the engine core flow path 14. The fan 12 spans the intake 24 and the bypass duct 26, and is operable to deliver air to both.

Downstream of the high pressure compressor 20 there is provided a combustor 30, a high pressure turbine 32 and a low pressure turbine 34. The fan 12 is coupled to a first shaft 36 which is in turn coupled to the low pressure turbine 34. The high pressure compressor 20 is coupled to a second shaft 38 which is in turn coupled to the high pressure turbine 32. The first shaft 36 and second shaft 38, in use, are contra-rotatable. That is to say, in use, the first shaft 36 and second shaft 38 rotate in opposite directions. The high pressure shaft 38 and low pressure shaft 36 are rotatable about a central rotational axis 39 of the compressor system.

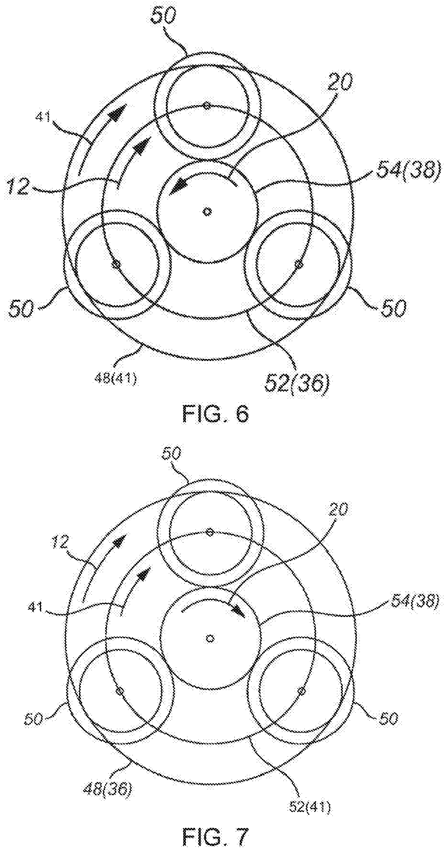

There is also provided a gear unit 40 (for example, an epicyclic gear unit), alternative examples of which are shown in more detail in Figure 6 and Figure 7. The first shaft 36 is coupled to a first input member 42 of the epicyclic gear unit 40. The second shaft 38 is coupled to a second input member 44 of the epicyclic gear unit 40. An intermediate rotor 41 is coupled to an output member 46 of the epicyclic gear unit 40. Hence the intermediate rotor 41 is driveable by the low pressure shaft 36 and the high pressure shaft 38. Put another way, the intermediate rotor 41 is driven at a speed, and with a power output, defined by a summing relation of the low pressure shaft 36 and the high pressure shaft 38.

The intermediate rotor 41 comprises rotatable elements of the booster compressor 16 and an electric motor-generator 43. Put another way, the intermediate rotor 41 comprises parts of the booster compressor 16 and the electric motor-generator 43 which are rotatable about the central rotational axis 39. Hence both the booster compressor 16 and electrical motor-generator 43 are coupled to an output member 46 of the epicyclic gear unit 40.

The intermediate rotor 41 is centred on the central rotational axis 39. The intermediate rotor 41 comprises a central region 45 which forms the booster compressor 16, and carries rotor blades 16a. The central region 45 has a first end region and a second end region longitudinally spaced apart from one another along the central rotational axis 39 by the central region 45. A first coupling 47 extends from the first end region of the intermediate rotor 41 to the rotatable element 43a of the electric motor generator 43. A second coupling 49 extends from the second end region of the intermediate rotor 41 to the epicyclic gear unit 40.

A first non rotatable stator structure 60 is provided around the central rotational axis 39 and fixed to a static casing 62 of the compressor system. The first non rotatable stator structure 60 is located longitudinally along the central rotational axis 39 between the fan 12 and the booster compressor 16.

The electrical motor-generator 43 may be of a conventional kind, and comprises rotor and stator elements operable to rotate relative to one another either as a motor, when required to turn rotatable elements of the system, or as an electrical generator (e.g. to provide electricity to the engine and external systems, such as a vehicle the engine is attached to which may be a land, sea or air vehicle) when the turbo machine is operating in a self-sustaining mode (e.g. during normal operation). Thus the rotatable element 43a of the electric motor-generator 43 comprises an electrical rotor assembly. The electric motor-generator 43 further comprises a non rotatable stator element 43b spaced apart from the rotor assembly 43a, and coupled to the first non rotatable stator structure 60. In the example shown the non rotatable stator element 43b is provided radially outward of the electrical rotor element 43a.

In an alternative example shown in Figure 5 the majority of the electrical motor generator of the compressor system is located external to an outer casing 62 of the compressor system. Thus an electrical rotor of the electric motor generator is coupled to the intermediate rotor 41 via a power off take shaft 90. Hence the shaft 90 is provided a rotatable element of the electric motor generator, although the electric motor generator may comprise other rotatable elements in addition to the shaft 90.

The power offtake shaft (or electric motor-generator rotatable element) 90 is coupled to the intermediate rotor 41 by a radial gear arrangement. The radial gear arrangement may comprise any suitable gearing arrangement to translate the rotation of the intermediate rotor 41 to rotation of the shaft 90 extending away from the rotor 41. In the example shown the gear arrangement comprises a set of gear teeth 94 which extend in a ring around the rotational axis 39, and a gear wheel 96 coupled to the shaft 90 and at right angles to, and meshed with, the gear ring 94. In the example shown the shaft 90 is shown in cross-section extending perpendicular to, and offset from, the central rotational axis 39 (i.e. *"out of the page"*)*.* The shaft 90 is rotatable about an axis 98, which also extends perpendicular to, and offset from, the central rotational axis 39 (i.e. *"out of the page"*)*.* In other examples the shaft 90 may be at an angle to the central rotational axis 39 and/or the shaft axis 98 may intersect with the central rotational axis 39.

Hence one end of the shaft 90 is in rotatable engagement with the intermediate rotor 41 and the other end of the shaft 90 is in rotatable engagement with an electric rotor of the electric motor. The shaft 90 may be in direct rotatable engagement with the electric rotor, or may be coupled to the electric rotor via a gearing arrangement. Hence rotation of the intermediate rotor 41 will drive the electric motor via the rotatable element (i.e. shaft) 90.

As shown in Figures 3 to 5, a brake 68 may be provided between the non rotatable stator structure 60 and the fan 12. In a first mode of operation the brake is operable to lock the fan 12 relative to the non rotatable stator structure 60. In a second mode of operation is operable to allow the fan 12 to rotate about the central rotational axis 39 relative to the non rotatable stator structure 60. The brake may be of any appropriate configuration, but may (for example, and as shown in Figure 4) include a member (or disc) 70 which extends from the fan 12 which sits within a pad or shoe assembly 72 which extends from the first non rotatable structure 60. The shoe assembly 72 may be controlled to clamp and release the disc 70 by an actuator 74 controlled by (for example) an engine control unit. Hence the actuator 74 causes pads within the pad/shoe assembly to press onto the member 70, increasing the friction there between.

In operation, when the starter-motor-generator 43 is used to turn the compressor system (for example to start an engine it forms a part of) electrical power is supplied from either the vehicle (e.g. aircraft) or an external source (for example a ground power unit) to the motor 43 to rotate intermediate rotor 41 and hence the booster (or "intermediate") compressor 16. Since the intermediate rotor 41 is coupled to the gear unit 40, the gear unit 40 will apply torque to rotate both the high pressure shaft 38 and the low pressure shaft 36. However, in order to start a gas turbine engine a certain air flow has to be achieved through the *"core engine"* flow path 14 (i.e. the booster compressor 16, high pressure compressor 20, combustor, high pressure turbine 32 and low pressure turbine 34).

Thus the brake 68 may optionally be applied to prevent the rotation of the fan 12 and low pressure shaft 36, but allow rotation of the booster compressor 16 and high pressure compressor 20, during a starting sequence. With the fan 12 locked in a non-rotating state by the brake 68, the starter power from the starter-motor-generator 43 is directed to rotating the booster compressor 16 and high pressure compressor 20, and thus generating sufficient air flow through the core flow path 14.

In the absence of locking the fan 12 in a non-rotating state, a proportion of the air flow will be generated by the fan 12 and passed down the bypass duct 26 rather than the core engine flow path 14, thereby wasting much of the applied starter power, since rotation of the low pressure shaft 36 (and hence fan 12) does not contribute to starting the engine.

Once the engine has started, the brake 68 is released and the fan 12 and low pressure shaft rotate as during normal operation.

A second non rotatable stator structure 66 may be provided around the central rotational axis 39, and located longitudinally along the central rotational axis 39 between the booster compressor 16 and high pressure turbine 32. In the example shown the second non rotatable stator structure 66 is located longitudinally along the central rotational axis 39 between the booster compressor 16 and high pressure compressor 20.

A one directional coupling 80 may be provided between the high pressure shaft 38 and the second non rotatable stator structure 66. The one directional coupling 80 may take the form of a sprag clutch, a ratchet or any other device which permits rotation in only one direction.

The one directional coupling 80 is operable to allow the high pressure shaft 38 to rotate about the central rotational axis 39 in either, but not both of, a clockwise or anti-clockwise direction.

This is advantageous because, under certain circumstances, an aero-engine must be capable of re-starting in flight. This is known as a "windmill relight". In such a re-start, a ram effect caused by the forward speed of the aircraft rotates the compressors (such that they "windmill") and this enables the engine to re-start without the use of external power. The ability to do this is an important safety feature.

During such a scenario, power from the wind-milling fan 12 is transmitted through the gear unit 40 and thereby induces rotation of the booster compressor 16. However, "windmill" torque from the fan 12 may apply a torque to the high pressure shaft 38 in the opposite direction to its normal direction of rotation. However, the one directional coupling 80 prevents reverse rotation, and thus contributes to successful "windmill relights" capability.

As shown in Figure 6, the output member 46 of the epicyclic gear unit 40 is an annulus (or "ring") gear 48 located radially outwards of and rotatably engaged with an array of planet gears 50. The first input member 42 of the epicyclic gear unit 40 is provided as a planet carrier 52, wherein the planet carrier 52 holds the array of planet gears 50. The array of planet gears 50 is radially outward of and rotatably engaged with the second input member 44. The second input member 44 of the epicyclic gear unit 40 is provided as a sun gear 54.

That is to say, in the examples of Figures 3 to 6, the first shaft (or "low pressure shaft") 36 is coupled to the planet carrier 52, the second shaft (or "high pressure shaft") 38 is coupled to the sun gear 54 and the intermediate rotor 41 (and hence the rotor 45 of the booster compressor 16 and rotatable element 43a, 90 of the electric motor-generator) is coupled to the annulus gear 48. In Figure 6 (and Figure 7) the connection between the above components is indicated by the inclusion of the reference numerals of the intermediate rotor 41, first shaft 36 and second shaft 38 in brackets next to the reference numerals of the planet carrier 52, annulus gear 48 and sun gear 54 as appropriate Hence the intermediate rotor 41 is in rotatable engagement with and, in use, driven by the first (low pressure) shaft 36 and the second (high pressure) shaft 38, where the first (low pressure) shaft 36 and the second (high pressure) shaft 38, in use, rotate in opposite directions to one another Thus, in Figure 6, the fan 12 (coupled to the first/low pressure shaft 36) and the intermediate rotor 41, are configured to rotate in the same direction in use, and the high pressure compressor 20 (coupled to the second/high pressure shaft 38) is configured to rotate in an opposite direction to the fan 12 and intermediate rotor 41 in use.

In an alternative example shown in Figure 7, which is not according to the present invention, the first shaft (or "low pressure shaft") 36 is coupled to the annulus gear 48, the second shaft (or "high pressure shaft") 38 is coupled to the sun gear 54 and the intermediate rotor 41 is coupled to the planet carrier 52. Hence the intermediate rotor 41 is in rotatable engagement with and, in use, driven by the first (low pressure) shaft 36 and the second (high pressure) shaft 38, where the first (low pressure) shaft 36 and the second (high pressure) shaft 38, in use, rotate in the same direction. Thus the high pressure compressor 20 (coupled to the second/high pressure shaft 38) and fan 12 (coupled to the first/low pressure shaft 36) and intermediate rotor 41, are configured to rotate in the same direction in use.

Further examples of the device of the present disclosure which are not according to the present invention, may be configured such that a booster compressor and electric motor-generator is driven by both the low pressure and high pressure shafts via a differential gear arrangement.

In an example which is not according to the present invention, the diameters of the sun gear 42, planet gears 44 and annulus gear 48 of the epicyclic gear unit 40 are provided such that, in use, the intermediate rotor 41 rotates in the same direction as the fan 12 and, over a predetermined range of rotational speeds of the first shaft 36 and second shaft 38, the intermediate rotor 41 rotates faster than the fan 12 and slower than the high pressure compressor. That is to say, the rotational speed of the intermediate rotor 41 is intermediate between the speed of the fan and the speed of the high pressure compressor. The actual speed of the intermediate rotor 41 is a function of both the speed of the low pressure shaft and the speed of the high pressure shaft combined with the geometric dimensions of the gears in the epicyclic arrangement.

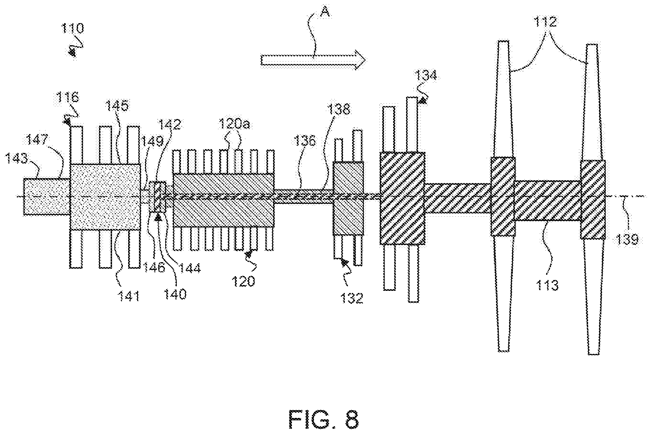

In Figure 8 is an alternative example of a turbo machine with compressor system according to the present disclosure. The rotatable components are shown in a diagrammatic representation, with details of other engine components (for example casings, combustors, stator vanes and electrical stators) omitted for clarity.

The example of Figure 8 relates to an "open rotor" configuration which incorporates the features of the combined intermediate/booster compressor and starter generator, coupled to an output of a gear unit, the gear unit having inputs from a low pressure shaft and high pressure shaft.

By way of background, open rotor configurations require a higher degree of integration of the propulsion system than conventional turbofans. In addition, aircraft increasingly will employ more electric technology which offers further reduction in weight and fuel consumption by replacing conventional hydraulic and bleed air offtake systems. This places increased power extraction demands on the engine from the aircraft systems which is particularly difficult to satisfy at low engine power levels, which the invention of the present disclosure is configured to overcome.

Figure 8 shows a turbo machine 110 comprising a low pressure shaft 136 coupled to a low pressure turbine 134 (or *"free power turbine"*) and a high pressure shaft 138 coupled to a high pressure turbine 132. The high pressure shaft 138 and low pressure shaft 136 are rotatable about a central rotational axis 139. The compressor system comprises a fan (or propeller) 112, at the nominal "rear" or "trailing end" of the machine. The fan 112 may comprise two rows of fan blades, which may be rotationally linked by a gearbox 113. The fan 112 is driven by the low pressure (or "free") turbine 134 via the low pressure shaft 136. There is also provided a booster (or *"first stage"*) compressor 116 at the nominal "front" or "leading end" of the machine. Thus the compressors 116, 120, turbines 132, 134 and fan 112 define the air flow path through the system, in a direction indicated by arrow "A".

For clarity, the various elements are shown with different cross-hatching to show which parts are connected. The low pressure shaft 136 is coupled to a first input member 142 of a gear unit 140, which may be an epicyclic gear unit. The high pressure shaft 138 is coupled to a second input member 144 of the gear unit 140. An intermediate rotor 141 is coupled to an output member 146 of the gear unit 140. Hence the intermediate rotor 141 is driveable by the low pressure shaft 136 and the high pressure shaft 138.

As with the examples of Figures 3 to 5 the intermediate rotor 141 comprises rotatable elements 116, 143a of the booster compressor 116 and an electric motor-generator 143.

The intermediate rotor 141 is centred on the central rotational axis 139 and comprises a central region 145 which forms the booster compressor 116. The central region 145 has a first end region and a second end region longitudinally spaced apart along the central rotational axis 139 by the central region 145. A first coupling 147 extends from the first end region of the intermediate rotor 141 to the rotatable element 143a of the electric motor generator 143. A second coupling 149 extends from the second end region of the intermediate rotor 141 to the epicyclic gear unit 140.

Hence figure 8 illustrates an architecture for a contra-rotating geared open rotor pusher engine configuration. It shows a high pressure spool and a forward drive shaft from a free power turbine, both connected to the booster compressor 116 and electric motor generator 143 via the gear unit 140.

This has the effect of the booster 116 and electric motor generator 143 extracting power from both the high pressure turbine 132 and free power turbine 134 and operating over a speed range between the two spools. This arrangement permits the work split of the compressors and turbines to be optimised more flexibly, and hence enables a more efficient design. It also enables achievement of higher core pressure ratios with the minimum number of turbine stages.

Additionally, by attaching the starter-generator-motor 143 to the booster compressor 116, aircraft electrical power can be supplied by both turbines.

Further, and as described in relation to the examples of Figures 3 to 5, there may also be provided a brake on the fan/propeller blades 112. This enables the engine 110 to be started by a single electrical machine 143 which can operate in starter or generator mode.

Hence in operation of the fan and compressor system of the present disclosure, the arrangement is such that torque is supplied to drive an intermediate rotor 41, 141 from both the first (low pressure) shaft 36, 136 and the second (high pressure) shaft 38, 138.

The proportion of torque extracted from each shaft 36, 136; 38, 138 remains constant throughout the running range of the turbomachine 10. It may be dictated by the diameters of the sun gear 42, planet gears 44 and annulus gear 48 of the epicyclic gear unit 40. Both the intermediate rotor 41, 141 speed and the torque split between the first (low pressure) shaft 36, 136 and the second (high pressure) shaft 38. 138 may be optimised for a particular design of engine, for example by changing the diameters of the sun gear 42, planet gears 44 and annulus gear 48 of the epicyclic gear unit 40, 140.

Although the preceding examples are described with reference to an epicyclic gear unit, any appropriate differential gear unit may be used as an alternative.

The device of the present disclosure provides the advantage that the booster compressor may achieve a higher rotational speed, which reduces the number of low pressure and/or high pressure stages required to achieve the desired high pressure ratio, which thus reduces the required length and weight of the engine. Additionally the diameter of the booster compressor need not be as large as for a conventional booster arrangement.

The device permits the work split between the low and high pressure shafts to be optimised more flexibly within overall component mechanical and aero design constraints.

The consequential reduced booster compressor diameter allows the shape of the duct between the booster and high pressure compressor to be made more aerodynamic, thus reducing pressure loss in the duct.

Off-design matching of the engine can also be improved, reducing off-design specific fuel consumption. The booster speed is a function of both the low pressure and high pressure shaft speeds and this function can be optimised to better match the compressor speeds at off design conditions.

Lower booster compressor diameter also reduces fan hub diameter and hence reduces fan tip diameter for a given flow area and thus powerplant drag when used on an aircraft.

Torque load for the low pressure shaft is reduced, permitting smaller diameter shaft and so lighter weight high pressure components (e.g. discs).

The increased work per stage in the booster will also increase the air temperature downstream of the first or only rotor stage of the booster, and hence eliminate the need for anti-icing of downstream compressor stators.

Also, since the booster diameter is reduced, the Hade angle at fan inner may be reduced, and hence the outer diameter at fan exit and the bypass duct diameter can be lower than for a conventional arrangement. This allows for a further reduction in nacelle outer diameter and weight.

The provision of the integrated starter-motor-generator 43, 143 provides the advantage that there is no need for drive shafts and gearbox associated with conventional start motor systems where an electric motor is mounted to the exterior of the engine. This helps to reduce weight and cost of the system. Additionally, since the starter-motor-generator is provided inside the compressor system, the engine nacelle it is associated with can be made slimmer, which in use will reduce aerodynamic drag and thus make the system more fuel efficient.

Conventional high bypass ratio engines which may be required to provide large amounts of electrical power to aircraft systems in order to supply cabin conditioning and flight control systems are known to suffer problems in extracting this high power. If the power is extracted from the high pressure shaft, this can cause the engine to either surge or run down under certain circumstances. If the power is taken from the low pressure shaft, the large speed variation between full power and low power (such as when the aircraft is descending) can cause difficulties with the electrical generator If the generator is designed for the high speed, it may not generate sufficient power at the low speed If the generator is connected as in the present description, its speed range is greatly reduced and since power extraction is shared between low and high pressure shafts, the effect on the high pressure shaft is much reduced.

With reference to the open rotor arrangement shown in Figure 8, the use of the gear unit 140 coupled to the booster compressor 116 and starter-motor-generator-143 to enhance the performance of the engine and to provide a more efficient means of electrical power extraction is not limited to this configuration. It may be applied to tractor open rotor configurations where there may be more space to pass the free power turbine shaft through the core engine.

Additionally the provision of a gear unit 40, 140 coupled to a booster compressor 16, 116 and starter-motor-generator 43, 143 according the present disclosure may also be included turboprop or turboshaft engine configurations as a means of improving the performance and providing more efficient power extraction

The greater flexibility offered by the device to optimise the engine design enables the desired engine performance to be achieved using more conventional proven technologies which will reduce development risk and cost.

## Claims

1. A turbo machine (10) comprising :
a low pressure shaft (36) coupled to a low pressure turbine (34); and
a high pressure shaft (38) coupled to a high pressure turbine (32),
the high pressure shaft (38) and low pressure shaft (36) being rotatable about a central rotational axis (39);
a compressor system comprising :
a fan (12) driven by the low pressure turbine (34) via the low pressure shaft (36);
a booster compressor (16); and
an epicyclic gear unit (40); and
the turbo machine (10) further comprising an intermediate rotor comprising rotatable elements (16, 43a) of:
the booster compressor (16); and
an electric motor-generator (43);
**characterised in that**:
the low pressure shaft (36) is coupled to a planet carrier (52) of the epicyclic gear unit (40);
the high pressure shaft (38) is coupled to a sun gear (54) of the epicyclic gear unit (40);
an intermediate rotor (41) is coupled to an annulus gear (48) of the epicyclic gear unit (40); and
the low pressure shaft (36) and high pressure shaft (38) are configured, in use, to contra-rotate;
such that the intermediate rotor (41) and electric motor-generator (43) are driven by the low-pressure shaft (36) and the high-pressure shaft (38) at a speed, and with a power output, defined by a summing relation of the low-pressure shaft (36) and the high-pressure shaft (38).

2. The turbo machine (10) as claimed in claim 1 wherein
the intermediate rotor (41) is centred on the central rotational axis (39) and comprises :
a central region (45) that carries the rotor blades (16a) the booster compressor (16);
the central region (45) having a first end region and a second end region longitudinally spaced apart along the central rotational axis (39) by the central region (45);
a first coupling (47) extends from the first end region of the intermediate rotor (41) to the rotatable element (43a) of the electric motor motor-generator (43); and
a second coupling (49) extends from the second end region of the intermediate rotor (41) to the epicyclic gear unit (40),
such that the first coupling (47), the central region (45) carrying the rotor blades (16a), and the second coupling (49) are provided in series along the central rotational axis (39).

3. The turbo machine (10) as claimed in claim 1 or claim 2 comprising :
a first non rotatable stator structure (60) provided around the central rotational axis (39) and
fixed to a static casing (62) of the compressor system

4. The turbo machine (10) as claimed in claim 3 wherein
the first non rotatable stator structure (60) is located longitudinally along the central rotational axis (39)
between the fan (12) and the booster compressor (16).

5. The turbo machine (10) as claimed in claim 3 or claim 4 comprising :
the rotatable element (43a) of the electric motor-generator (43) comprises an electrical rotor assembly; and
the electric motor-generator (43) further comprises a non rotatable stator element (43b) coupled to the first non rotatable stator structure (60).

6. The turbo machine (10) as claimed in any one of claims 3 to 5 further comprising :
a second non rotatable stator structure (66) provided around the central rotational axis (39)
located longitudinally along the central rotational axis (39) between the booster compressor (16) and high pressure turbine (32).

7. The turbo machine (10) as claimed in any one of claims 3 to 6 wherein
a brake (68) is provided between the first non rotatable stator structure (60) and the fan (12), wherein, the brake (68) :
in a first mode of operation is operable to lock the fan (12) relative to a non rotatable stator structure (60); and
in a second mode of operation is operable to allow the fan (12) to rotate about the central rotational axis (39) relative to the non rotatable stator structure (60).

8. The turbo machine (10) as claimed in claims 6 or 7 wherein
a one directional coupling (80) is provided between the high pressure shaft (38) and the second non rotatable stator structure (66);
the one directional coupling (80) operable to allow the high pressure shaft (38) to rotate about the central rotational axis (39) in either, but not both of, a clockwise or anti-clockwise direction.

9. The turbo machine (10) as claimed in any one of the preceding claims wherein the turbo machine (10) comprises an engine core flow path (14), the booster compressor (16) being provided at or downstream of an intake of the engine core flow path (14) and the fan (12) is provided upstream of the booster compressor (16).

10. The turbo machine (10) as claimed in claim 9 wherein the turbo machine (10) further comprises a bypass duct (26) radially outward of engine core flow path (14).

11. A gas turbine engine comprising a turbo machine (10) as claimed in any one of claims 1 to 10

## Patentansprüche

1. Turbomaschine (10), umfassend:
eine Niederdruckwelle (36), die mit einer Niederdruckturbine (34) gekoppelt ist; und
eine Hochdruckwelle (38), die mit einer Hochdruckturbine (32) gekoppelt ist,
wobei die Hochdruckwelle (38) und die Niederdruckwelle (36) um eine zentrale Drehachse (39) drehbar sind;
ein Verdichtersystem, umfassend:
einen Lüfter (12), der von der Niederdruckturbine (34) über die Niederdruckwelle (36) angetrieben wird;
einen Vorschaltverdichter (16); und
eine Planetengetriebeeinheit (40); und
wobei die Turbomaschine (10) ferner einen Zwischenläufer umfasst, der drehbare Elemente (16, 43a) von Folgendem umfasst:
dem Vorschaltverdichter (16); und
einem elektrischen Motor-Generator (43);
**dadurch gekennzeichnet, dass**:
die Niederdruckwelle (36) mit einem Planetenträger (52) der Planetengetriebeeinheit (40) gekoppelt ist;
die Hochdruckwelle (38) mit einem Sonnenrad (54) der Planetengetriebeeinheit (40) gekoppelt ist;
ein Zwischenläufer (41) mit einem Hohlrad (48) der Planetengetriebeeinheit (40) gekoppelt ist; und
die Niederdruckwelle (36) und die Hochdruckwelle (38) derart ausgelegt sind, dass sie sich im Gebrauch gegenläufig drehen;
so dass der Zwischenläufer (41) und der elektrische Motor-Generator (43) von der Niederdruckwelle (36) und
der Hochdruckwelle (38) bei einer Drehzahl und mit einer Ausgangsleistung angetrieben werden, die durch eine Summenbeziehung der Niederdruckwelle (36) und der Hochdruckwelle (38) definiert sind.

2. Turbomaschine (10) nach Anspruch 1, wobei der Zwischenläufer (41) auf der zentralen Drehachse (39) zentriert ist und umfasst:
einen zentralen Bereich (45), der die Läuferschaufeln (16a) des Vorschaltverdichters (16) trägt;
wobei der zentrale Bereich (45) einen ersten Endbereich und einen zweiten Endbereich aufweist, die in Längsrichtung entlang der zentralen Drehachse (39) durch den zentralen Bereich (45) beabstandet sind;
sich eine erste Kupplung (47) von dem ersten Endbereich des Zwischenläufers (41) zu dem drehbaren Element (43a) des elektrischen Motor-Generators (43) erstreckt; und
sich eine zweite Kupplung (49) von dem zweiten Endbereich des Zwischenläufers (41) zu der Planetengetriebeeinheit (40) erstreckt,
so dass die erste Kupplung (47), der zentrale Bereich (45), der die Läuferschaufeln (16a) trägt, und die zweite Kupplung (49) in Reihe entlang der zentralen Drehachse (39) bereitgestellt sind.

3. Turbomaschine (10) nach Anspruch 1 oder Anspruch 2, umfassend:
eine erste nicht drehbare Ständerstruktur (60), die um die zentrale Drehachse (39) bereitgestellt ist und
an einem statischen Gehäuse (62) des Verdichtersystems fixiert ist.

4. Turbomaschine (10) nach Anspruch 3, wobei
die erste nicht drehbare Ständerstruktur (60) in Längsrichtung entlang der zentralen Drehachse (39) zwischen dem Lüfter (12) und dem Vorschaltverdichter (16) angeordnet ist.

5. Turbomaschine (10) nach Anspruch 3 oder Anspruch 4, umfassend:
das drehbare Element (43a) des elektrischen Motor-Generators (43) umfasst eine elektrische Läuferanordnung; und
der elektrische Motor-Generator (43) umfasst ferner ein nicht drehbares Ständerelement (43b), das mit der ersten nicht drehbaren Ständerstruktur (60) gekoppelt ist.

6. Turbomaschine (10) nach einem der Ansprüche 3 bis 5, ferner umfassend:
eine zweite nicht drehbare Ständerstruktur (66), die um die zentrale Drehachse (39) bereitgestellt ist,
die in Längsrichtung entlang der zentralen Drehachse (39) zwischen dem Vorschaltverdichter (16) und der Hochdruckturbine (32) angeordnet ist.

7. Turbomaschine (10) nach einem der Ansprüche 3 bis 6, wobei eine Bremse (68) zwischen der ersten nicht drehbaren Ständerstruktur (60) und dem Lüfter (12) bereitgestellt ist, wobei die Bremse (68):
in einem ersten Betriebsmodus dazu betreibbar ist, den Lüfter (12) relativ zu einer nicht drehbaren Ständerstruktur (60) zu verriegeln; und
in einem zweiten Betriebsmodus dazu betreibbar ist, dem Lüfter (12) zu ermöglichen, sich um die zentrale Drehachse (39) relativ zu der nicht drehbaren Ständerstruktur (60) zu drehen.

8. Turbomaschine (10) nach Anspruch 6 oder 7, wobei
eine eindirektionale Kupplung (80) zwischen der Hochdruckwelle (38) und der zweiten nicht drehbaren Ständerstruktur (66) bereitgestellt ist;
wobei die eindirektionale Kupplung (80) dazu betreibbar ist, der Hochdruckwelle (38) zu ermöglichen, sich um die zentrale Drehachse (39) in eine, jedoch nicht beide, einer Richtung im Uhrzeigersinn oder gegen den Uhrzeigersinn zu drehen.

9. Turbomaschine (10) nach einem der vorhergehenden Ansprüche, wobei die Turbomaschine (10) einen Triebwerkskernströmungsweg (14) umfasst, wobei der Vorschaltverdichter (16) an oder stromabwärts eines Einlasses des Triebwerkskernströmungswegs (14) bereitgestellt ist und der Lüfter (12) stromaufwärts des Vorschaltverdichters (16) bereitgestellt ist.

10. Turbomaschine (10) nach Anspruch 9, wobei die Turbomaschine (10) ferner einen Umgehungskanal (26) radial außerhalb des Triebwerkskernströmungswegs (14) umfasst.

11. Gasturbinentriebwerk, umfassend eine Turbomaschine (10) nach einem der Ansprüche 1 bis 10.

## Revendications

1. Turbomachine (10) comprenant :
un arbre basse pression (36) accouplé à une turbine basse pression (34) ; et
un arbre haute pression (38) accouplé à une turbine haute pression (32),
l'arbre haute pression (38) et l'arbre basse pression (36) pouvant tourner autour d'un axe de rotation central (39) ;
un système de compresseur comprenant :
un ventilateur (12) entraîné par la turbine basse pression (34) par l'intermédiaire de l'arbre basse pression (36) ;
un compresseur de suralimentation (16) ; et
un réducteur épicycloïdal (40) ; et
la turbomachine (10) comprenant en outre un rotor intermédiaire composé d'éléments rotatifs (16, 43a) :
du compresseur de suralimentation (16) ; et
d'un moteur-générateur électrique (43) ;
**caractérisée en ce que** :
l'arbre basse pression (36) est accouplé à un porte-satellites (52) du réducteur épicycloïdal (40) ;
l'arbre haute pression (38) est accouplé à un planétaire (54) du réducteur épicycloïdal (40) ;
un rotor intermédiaire (41) est accouplé à un engrenage annulaire (48) du réducteur épicycloïdal (40) ; et
l'arbre basse pression (36) et l'arbre haute pression (38) sont conçus, lors de l'utilisation, pour tourner en sens inverse ;
de sorte que le rotor intermédiaire (41) et le moteur-générateur électrique (43) soient entraînés par l'arbre basse pression (36) et l'arbre haute pression (38) à une vitesse et, avec une puissance, définies par la relation de somme de l'arbre basse pression (36) et de l'arbre haute pression (38).

2. Turbomachine (10) selon la revendication 1,
le rotor intermédiaire (41) étant centré sur l'axe de rotation central (39) et comprenant :
une région centrale (45) qui porte les aubes de rotor (16a) du compresseur de suralimentation (16) ;
la région centrale (45) comportant une première région d'extrémité et une seconde région d'extrémité espacées longitudinalement le long de l'axe de rotation central (39) par la région centrale (45) ;
un premier accouplement (47) s'étendant de la première région d'extrémité du rotor intermédiaire (41) à l'élément rotatif (43a) du moteur-générateur électrique (43) ; et
un second accouplement (49) s'étendant de la seconde région d'extrémité du rotor intermédiaire (41) au réducteur épicycloïdal (40),
de sorte que le premier accouplement (47), la région centrale (45) portant les aubes de rotor (16a) et le second accouplement (49) soient disposés en série le long de l'axe de rotation central (39).

3. Turbomachine (10) selon la revendication 1 ou la revendication 2, comprenant :
une première structure de stator non rotative (60) disposée autour de l'axe de rotation central (39) et
fixée à un carter statique (62) du système de compresseur.

4. Turbomachine (10) selon la revendication 3,
la première structure de stator non rotative (60) étant située longitudinalement le long de l'axe de rotation central (39)
entre le ventilateur (12) et le compresseur de suralimentation (16).

5. Turbomachine (10) selon la revendication 3 ou la revendication 4, comprenant :
l'élément rotatif (43a) du moteur-générateur électrique (43) comprenant un ensemble rotor électrique ; et
le moteur-générateur électrique (43) comprenant en outre un élément de stator non rotatif (43b) accouplé à la première structure de stator non rotative (60).

6. Turbomachine (10) selon l'une quelconque des revendications 3 à 5, comprenant en outre :
une seconde structure de stator non rotative (66) disposée autour de l'axe de rotation central (39) située longitudinalement le long de l'axe de rotation central (39)
entre le compresseur de suralimentation (16) et la turbine haute pression (32).

7. Turbomachine (10) selon l'une quelconque des revendications 3 à 6, un frein (68) étant disposé entre la première structure de stator non rotative (60) et le ventilateur (12), le frein (68) :
dans un premier mode de fonctionnement, permettant de verrouiller le ventilateur (12) par rapport à une structure de stator non rotative (60) ; et
dans un second mode de fonctionnement, permettant au ventilateur (12) de tourner autour de l'axe de rotation central (39) par rapport à la structure de stator non rotative (60).

8. Turbomachine (10) selon la revendication 6 ou 7, un accouplement unidirectionnel (80) étant disposé entre l'arbre haute pression (38) et la seconde structure de stator non rotative (66) ;
l'accouplement unidirectionnel (80) permettant à l'arbre haute pression (38) de tourner autour de l'axe de rotation central (39) dans le sens des aiguilles d'une montre ou dans le sens inverse des aiguilles d'une montre, mais pas dans les deux à la fois.

9. Turbomachine (10) selon l'une quelconque des revendications précédentes, la turbomachine (10) comprenant une voie d'écoulement de noyau central (14), le compresseur de suralimentation (16) étant disposé au niveau ou en aval d'une entrée de la voie d'écoulement de noyau central (14) et le ventilateur (12) étant disposé en amont du compresseur de suralimentation (16).

10. Turbomachine (10) selon la revendication 9, la turbomachine (10) comprenant en outre un conduit de dérivation (26) situé radialement à l'extérieur de la voie d'écoulement de noyau central (14).

11. Turbine à gaz comprenant une turbomachine (10) selon l'une quelconque des revendications 1 à 10.
